# EUROPÄISCHE PATENTSCHRIFT

(11) **EP 2 095 926 B1**
(45) Veröffentlichungstag und Bekanntmachung des Hinweises auf die Patenterteilung: **28.11.2012**
(21) Anmeldenummer: 09153531.0
(22) Anmeldetag: 24.02.2009
(51) Int. Cl.: B29C 44/12, C08G 18/38, C08J 9/36

(54) **Schalldämpfende Dämmstoffe mit hoher Feuerwiderstandsdauer**
Acoustic-baffling dampening materials with high fire retardant duration
Matières isolants acoustiques dotées d'une durée de résistance au feu élevée

(30) Priorität: 28.02.2008 DE 102008011562
(43) Veröffentlichungstag der Anmeldung: 02.09.2009
(73) Patentinhaber: LANXESS Deutschland GmbH, 51369 Leverkusen (DE)
(72) Erfinder: Hansel, Jan-Gerd, 51469, Bergisch Gladbach (DE); Mauerer, Otto, 42799, Leichlingen (DE)

(56) Entgegenhaltungen:
- EP-A- 0 116 846
- EP-A- 1 348 542
- WO-A-2006/056194

## Beschreibung

Die vorliegende Erfindung betrifft flammwidrige, schalldämpfende Dämmstoffe bzw. Schaumstoffkombinationen, ein Verfahren zu ihrer Herstellung sowie ihre Verwendung.

Schaumstoffe auf Basis von synthetischen Polymeren werden in mannigfaltiger Weise als Wärmedämmstoffe verwendet. Beispiele sind Schaumstoffe aus Polyurethan, Polyisocyanurat, Polystyrol, Polyvinylchlorid, Polyethylen und Polypropylen. Schaumstoff-basierte Wärmedämmstoffe werden bevorzugt als harte, formstabile Schäume, sogenannte Hartschäume, hergestellt. Die damit einher gehende mechanische Stabilität bringt konstruktive Vorteile mit sich. Weitere Vorteile solcher Schaumstoffe sind die geringe Dichte, die niedrige Wärmeleitfähigkeit, die leichte Verarbeitbarkeit und der niedrige Preis. Nachteilig im Vergleich mit mineralischen Dämmstoffen ist ihre inhärente Entflammbarkeit. Daher sind viele Methoden bekannt, mit denen die Entflammbarkeit von Schaumstoffen verringert werden kann. Eine Übersicht zu Schaumstoffen und Verfahren ihrer Herstellung findet sich beispielsweise in Heinz Weber, Isidoor de Grave, Eckhart Röhrl: "Foamed Plastics", Ullmann's Encyclopedia of Industrial Chemistry, Electronic Release, 7th ed., 2005 Wiley-VCH Verlag GmbH & Co. KGaA, Weinheim 10.1002/14356007.a11_435.

Schaumstoffe können Schall absorbieren und werden daher zur Schalldämpfung eingesetzt. Es ist bekannt, dass vor allen weiche, hochgefüllte, elastische Schaumstoffe, sogenannte Weichschäume, eine gute Schalldämpfung bewirken. Dagegen sind Hartschäume für die Schalldämpfung wenig geeignet.

Es sind viele mögliche Anwendungen für Schaumstoffe bekannt, in denen gleichzeitig eine Wärmedämmung und eine Schallabsorption erforderlich ist. Beispielsweise werden Materialien gesucht, die den im Motorraum eines Automobils entstehenden Lärm vermindern und gleichzeitig die unkontrollierte Erwärmung der Fahrgastzelle durch die Motorabwärme vermeiden können. Auch bei der Konstruktion von Kühlgeräten soll einerseits das Laufgeräusch des Kompressors gedämpft und andererseits ein Kälteverlust verhindert werden. Im Bauwesen besteht Bedarf an Konstruktionselementen, die modernen Anforderungen an Heizenergie-Einsparung ebenso gerecht werden, wie der Bauakustik und dem Lärmschutz. In allen genannten Beispielen sind von den Materialien einschlägige Brandschutzvorschriften zu erfüllen. Dabei wird für die eingesetzten Materialien nicht nur ein bestimmtes Brandverhalten oder eine bestimmte Flammwidrigkeit gefordert, sondern auch eine bestimmte Feuerwiderstandsdauer. Als Feuerwiderstandsdauer wird der Zeitraum bezeichnet, für den ein Artikel im Brandfall den Auswirkungen eines Feuers, insbesondere der entstehenden Hitze ohne Funktionsverlust widerstehen kann.

Wird nun von einem als Konstruktionsmaterial einzusetzenden Schaumstoff gefordert, dass er gleichzeitig eine Schalldämpfung und eine Wärmedämmung bewirken soll, dann ist notwendiger Weise ein Kompromiss zwischen den schallabsorbierenden Eigenschaften eines Weichschaums und den konstruktiven Vorteilen eines Hartschaums zu finden. Häufig wird daher eine Kombination verschiedener Materialien eingesetzt.

In EP 0 056 267 A1 wird ein Bauteil auf Basis eines flammwidrigen Polyurethanschaumstoffs beschrieben, für das gute Wärme- und Schalldämmeigenschaften beansprucht werden.

In DE 10 2005 049 570 B3 wird ein schallabsorbierendes Material offenbart, das oberflächlich mit einem flammhemmenden Pulver, einer flammhemmenden Lösung oder einer flammhemmenden Beschichtung belegt und mit einer schalltransparenten Folie abgedeckt ist.

DE 29 00 157 A1 beschreibt Polystyrolschaumstoff- und Polyurethanschaumstoffplatten, deren Oberflächen Hohlräume aufweisen und die mit einer Flammschutzmittelzubereitung beschichtet sind. Wärme- und Schalldämmeigenschaften werden nicht erwähnt.

In US 3,934,066 werden Laminate aus einem Schaumstoff, einer Barriereschicht, einer Intumeszenzschicht und einer flexiblen Schutzschicht offenbart, die zur Wärme- und Schalldämmung geeignet sein sollen.

In EP 0 107 935 A1, US 4,168,347 und US 4,265,963 werden als Dämmstoff geeignete PolystyrolSchaumstoff-Platten mit einer Intumeszenzbeschichtung beschrieben.

Aus US 4,530,877 ist ein Dämmelement bekannt, das aus einer ersten Außenhaut, einer Intumeszenzschicht, einer Schaumstoffschicht und einer zweiten Außenhaut besteht. Die Außenhäute sind bevorzugt aus Stahlblech.

EP 0 707 948 1 beschreibt wärme- und schalldämmende Verbundelemente bestehend aus einer Polystyrol-Extruderschaum-Schicht, einer Klebstoff-Schicht und einer Gipskartonplatte.

Aus EP-A 1 348 542 sind schaumstoffenthaltende Verbundsysteme bekannt, die aus einem Polyisocyanurat-B1-, Polyisocyanuratimid-B1- oder einem Polyimid-B1-Schaumstoff bestehen, der mit intumeszierenden oder ablativen Dämmschichtbildnern als Deckschicht, und gegebenenfalls Zwischenschichten versehen ist.

Aus EP-A 0 116 846 sind bereits intumeszierende, flammwidrige Polyurethaschäume auf Basis von phosporhaltigen Polyolen bekannt.

Die WO 2006/056194 offenbart Mittel zur Herstellung von Brandschutzelementen auf Basis von Polyurethanschaumstoffen aus einer phosporhaltigen Polyol- und einer Diisocyanatkomponente, wobei diese Komponenten frei von Boraten sind.

Nachteilig an den Dämmstoffen aus dem Stand der Technik ist ihr komplexer Aufbau aus vielen Schichten oder ihre aufwändige Herstellung. Auch werden diese Dämmstoffe oft den aktuellen Brandschutzanforderungen, insbesondere hinsichtlich der Feuerwiderstandsdauer oder der Rauchgastoxizität, die z. B. durch halogenhaltige Flammschutzmittel ungünstig beeinflusst werden kann, nicht mehr gerecht. Schließlich sind die akustischen Eigenschaften, insbesondere die Schallabsorption, unbefriedigend.

Aufgabe der vorliegenden Erfindung war es daher, Dämmstoffe bereit zu stellen, die gleichzeitig schalldämpfend, wärmedämmend und besonders flammwidrig sind und sich wegen ihres einfachen Aufbaus leicht herstellen lassen. Überraschend wurde gefunden, dass diese Aufgabe gelöst werden kann, wenn man bekannte Schaumstoffe mit einer speziellen Intumeszenzschicht versieht.

Gegenstand der vorliegenden Erfindung sind Dämmstoffe bestehend mindestens aus einer Isolierschicht und einer Intumeszenzschicht, dadurch gekennzeichnet, dass
A) die Isolierschicht aus einem Polyurethan-Hartschaum besteht,
B) die Intumeszenzschicht aus einem Polyurethan-Schaumstoff auf Basis von phosphorhaltigen Polyolen der Formel (I)

   (R¹-O)₂P(=O)-CH₂-N(CHR²-CHR³-OH)₂ (I)
worin
- R¹: gegebenenfalls mit einer Hydroxylgruppe substituiertes C₁- bis C₄-Alkyl bedeutet und
- R² und R³: unabhängig voneinander H oder Methyl bedeuten, besteht, wobei die Isolierschicht und die Intumeszenzschicht an der gemeinsamen grenzfläche fest und wasserständig miteinander verbunden sind und

### C) die Dicke der Intumeszenzschicht 2 - 98 % der Dicke des gesamten Dämmstoffs beträgt.

Zur Klarstellung sei angemerkt, dass vom Rahmen der Erfindung alle nachfolgend aufgeführten, allgemeinen oder in Vorzugsbereichen genannten Definitionen und Parameter in beliebigen Kombinationen umfasst sind.

Der Polyurethan-Hartschaum der Isolierschicht kann ein flammwidriger Hartschaum sein. Seine Flammwidrigkeit kann beispielsweise auf der Verwendung von Flammschutzmitteln bei seiner Herstellung beruhen. Als Flammschutzmittel können in dem synthetischen Schaumstoff beispielsweise die für diesen Zweck bekannten chlor-, brom-, stickstoff-, phosphor-, antimon-, aluminium - und/oder magnesiumhaltigen Substanzen enthalten sein.

Die Intumeszenzschicht besteht aus einem Polyurethan-Schaumstoff auf Basis von phosphorhaltigen Polyolen der allgemeinen Formel (I)

(R¹-O)₂P(=O)-CH₂-N(CHR²-CHR³-OH)₂ (I)

worin
R¹ gegebenenfalls mit einer Hydroxylgruppe substituiertes C₁- bis C₄-Alkyl und
R² und R³ unabhängig voneinander H oder Methyl
bedeuten. Derartige Polyurethan-Schaumstoffe und die zu ihrer Herstellung benötigten Rohstoffe und Herstellverfahren sind bekannt, beispielsweise aus EP 0 116 846 A1, EP 0 218 080 A1 oder EP 0 400 402 A1.

Die Isolierschicht liegt als Hartschaum vor, die Intumeszenzschicht kann als Weichschaum oder als Hartschaum hergestellt werden. Dadurch kann der Dämmstoff vielen Anwendungssituationen angepasst werden.

In einer bevorzugten Ausführungsform der Erfindung handelt es sich bei der Isolierschicht um einen Hartschaum und bei der Intumeszenzschicht um einen Weichschaum. In einer weiteren, bevorzugten Ausführungsform der Erfindung handelt es sich bei der Isolierschicht um einen Hartschaum und bei der Intumeszenzschicht ebenfalls um einen Hartschaum oder einen halbharten Schaum.

Neben den beiden erfindungswesentlichen Schichten können die Dämmstoffe weitere Komponenten beinhalten. Insbesondere können die beiden genannten Schichten in mehrfacher Ausführung verbunden sein. So kann der Dämmstoff beispielsweise aus dem Verbund Intumeszenzschicht-Isolierschicht-Intumeszenzschicht oder aus dem Verbund Isolierschicht-Intumeszenzschicht-Isolierschicht bestehen. Weiterhin können beispielsweise Folien, Gewebe, Vliese, Matten und dergleichen aus Metallen, Kunststoffen, Holz oder anderen Pflanzenmaterialien enthalten sein. Es können auch Schichten aus mineralischen Werkstoffen, bevorzugt Zement oder Gips, enthalten sein.

Isolierschicht und Intumeszenzschicht der erfindungsgemäßen Dämmstoffe sind an der gemeinsamen Kontaktfläche fest und wasserbeständig miteinander verbunden. Im Sinne der vorliegenden Erfindung wird dasjenige Außenmaß eines beliebigen Formkörpers bestehend aus einem erfindungsgemäßen Dämmstoff, das im Wesentlichen lotrecht zur Kontaktfläche gemessen wird, als Dicke des gesamten Dämmstoffs bezeichnet. Diese Dicke des gesamten Dämmstoffs kann je nach Anwendung innerhalb weiter Grenzen variieren. So kann die Dicke weniger als 1 mm oder auch mehr als 1000 mm betragen. Bevorzugt beträgt die Dicke des gesamten Dämmstoffs zwischen 1 mm und 1000 mm.

Da beide Komponenten der erfindungsgemäßen Dämmstoffe aus Schaumstoffen bestehen, sind ihrer Formgebung keine Grenzen gesetzt. Die Dämmstoffe können als Dämmstoffelemente beispielsweise in Form von Quadern oder Platten hergestellt werden. Dabei kann die Intumeszenzschicht so angebracht sein, dass sie nur eine Seite oder auch beliebig viele Seiten des Quaders oder der Platte bedeckt. Die Dämmstoffelemente können aber auch in der Form eines Zylindermantels oder einer Schale ausgebildet werden, wie sie zur Dämmung von Rohren nützlich ist. Der Dämmstoff kann auch als Profil hergestellt werden, um damit beispielsweise Fugen abzudichten. Insbesondere kann sich die Form des Dämmstoffs aber auch jeder beliebigen, durch die Anwendung vorgegebenen Form anpassen, beispielsweise einem Hohlraum in einer Automobilkarosserie.

Die beiden Schichten der Dämmstoffe können nach den für Polyurethan-Schaumstoffe bekannten Verfahren hergestellt und in beliebiger Weise miteinander verbunden werden.

Beispielsweise kann die Herstellung der Schichten nach dem Einstufenverfahren, bei dem die Rezepturkomponenten rezepturgetreu vermischt und anschliessend zur Reaktion gebracht werden, geschehen, wie in Kunststoff Handbuch, Bd. 7, 3. Aufl., 1993, Hanser Verlag, auf Seite 140 beschrieben. Ein Hartschaum, der als Isolierschicht fungiert, kann beispielsweise kontinuierlich auf einer Doppeltransportbandanlage wie in Kunststoff Handbuch, Bd. 7, 3. Aufl., 1993, Hanser Verlag, auf Seite 272 bis 277. beschrieben, gefertigt werden. Seiten 272 bis 273 beschreiben darin ein kontinuierliches Verfahren zur Herstellung von Isolierschäumen auf einer Doppeltransportanlage, die Seiten 274-277 beschreiben diskontinuierliche Herstellungsvarianten. Auf diese Weise hergestellte Platten können dann mit einer Intumeszenzschicht beschichtet werden. Die Herstellung der Intumeszenzschicht kann auf die gleiche Weise wie die Herstellung der Isolierschicht erfolgen.

Besonders vorteilhaft ist jedoch das im Folgenden beschriebene Verfahren, in dem Herstellung und Verbindung integriert sind.

Gegenstand der vorliegenden Erfindung ist auch ein Verfahren zur Herstellung von Dämmstoffen gemäß Anspruch 1, die mindestens aus einer Isolierschicht aus einem Polyurethan-Hartschaum und einer Intumeszenzschicht aus einem Polyurethan-Schaumstoff auf Basis von phosphorhaltigen Polyolen der Formel (I) bestehen, dadurch gekennzeichnet, dass
A) nach bekannten Verfahren ein Formkörper, Profil oder ähnliches Halbzeug aus dem Polyurethan-Hartschaum hergestellt wird,
B) durch Mischen der zur Herstellung des Polyurethan-Schaumstoffs auf Basis von phosphorhaltigen Polyolen der Formel (I) notwendigen Rohstoffe eine flüssige Reaktionsmischung hergestellt wird und
C) diese flüssige Reaktionsmischung auf die betreffenden Oberflächen des Halbzeugs aufgetragen wird, wo sie aufschäumt und aushärtet.

Alle drei Schritte des Verfahrens können diskontinuierlich oder kontinuierlich durchgeführt werden. Der Begriff "nach bekannten Verfahren" bezieht sich auf die bekannten, oben genannten Herstellungsverfahren für Polyurethan-Hartschaum.Der zweite Schritt B) des Verfahrens wird bevorzugt bei 5 bis 50 °C durchgeführt. Besonders bevorzugt wird er bei 15 bis 35 °C durchgeführt. Das Mischen kann bevorzugt in einem Förder- und Mischkopf, wie er in der Polyurethanherstellung üblich ist, durchgeführt werden.

Der dritte Schritt C) des Verfahrens wird bevorzugt bei 5 bis 150 °C durchgeführt. Besonders bevorzugt wird er bei 15 bis 90 °C durchgeführt. Er wird bevorzugt nach der Methode des Formschäumens ausgeführt. Dabei wird der Formkörper aus dem synthetischen Schaumstoff in eine Form eingebracht. In der Form, die auf eine Temperatur von 5 bis 150 °C temperiert sein kann, wird die flüssige Reaktionsmischung auf den Formkörper aufgebracht und die Form dann verschlossen. Beim Aufschäumen und Aushärten der Reaktionsmischung wird dabei das durch die Form und den enthaltenen Formkörper definierte Restvolumen vollständig von der Intumeszenzschicht ausgefüllt.

Das erfindungsgemäße Verfahren eignet sich insbesondere zur Herstellung von Dämmstoffelementen.

Als Dämmstoffelemente werden im Sinne dieser Erfindung einen Dämmstoff enthaltende Artikel bezeichnet, die in standardisierten Formen und Größen vorgefertigt werden, so dass sie für eine bestimmte Anwendung exakt passend und leicht handhabbar eingesetzt werden können. Dämmstoffelemente werden beispielsweise in Form von Platten im Baubereich benötigt.

Die aus dem erfindungsgemäßem Dämmstoff hergestellten beziehungsweise nach dem erfindungsgemäßen Verfahren hergestellten Dämmstoffelemente zeichnen sich durch die Integration von Schallschutz, Wärmedämmung und Brandschutz in einem Bauelement aus. Eine separate Installation, z. B. von Brandschutz- und Schallschutzelementen, ist nicht mehr erforderlich. Sie sind selbsttragend, das heißt, es ist keine Komponente mit allein konstruktiver Funktion notwendig, die nicht zur gewünschten Wirkung beiträgt (Stütz-, Begrenzungs-, Tragkomponente). Dies bringt wesentliche Vorteile in der Anwendung mit sich, da die Dämmstoffelemente sehr leicht sind und einfach zu schneiden sind. Da beide Schichten der Dämmstoffelemente aus weichem Schaumstoff bestehen können, sind diese in der Lage, Unebenheiten am Einsatzort (beispielsweise Mauerwerk, Estrich) auszugleichen.

Das erfindungsgemäße Verfahren gewährleistet, dass Isolierschicht und Intumeszenzschicht fest und wasserbeständig miteinander verbunden sind, ohne dass dafür zusätzliche Kleber notwendig sind.

Gegenstand der vorliegenden Erfindung ist schließlich die Verwendung von Dämmstoffen gemäß dem vorliegenden Ansprüchen, die mindestens aus einer Isolierschicht aus einem Polyurethan-Hartschaum und einer Intumeszenzschicht aus einem Polyurethan-Schaumstoff auf Basis von phosphorhaltigen Polyolen der Formel (I) bestehen und zur Wärmedämmung oder zur Schalldämpfung eingesetzt werden. In einer bevorzugten Ausfürungsform der Erfindung werden die Dämmstoffe für Zwecke verwendet, in denen gleichzeitig eine Wärmedämmung und eine Schalldämpfung gefordert ist. In einer besonders bevorzugten Ausführungsform weisen die Dämmstoffe eine hohe Feuerwiderstandsdauer von mehr als 30 Minuten auf und werden zur Wärme- und Schalldämmung eingesetzt. Beispiele für solche Verwendungszwecke finden sich im Fahrzeug-, Maschinen-, Behälter- und Anlagenbau, im Innenausbau von Wohn-, Geschäfts- und Industriebauten, bei der Isolierung von Rohrleitungen, oder bei der Herstellung von Kühl- und Gefriergeräten.

Anhand der nachfolgenden Beispiele wird die Erfindung näher erläutert, ohne dass dadurch eine Einschränkung der Erfindung bewirkt werden soll.

### Beispiele

Sofern nicht anders vermerkt, beziehen sich alle Teile und Prozentangaben auf das Gewicht.

### Ausgangsstoffe zur Herstellung der Dämmstoffe

Als Isolierschicht wurde eine Isolierschaum-Platte aus handelsüblichem Polyurethan-Hartschaum mit einer Dichte von 30 kg/m³ verwendet, die gemäß DIN 4102 B2 flammwidrig ausgerüstet war. Die Ausgangsstoffe zur Herstellung der Intumeszenzschicht sind detailliert in EP 0 217 080 A1 beschrieben.

### Herstellung der Dämmstoffe

### Beispiel 1

### Dämmstoff bestehend aus einseitig mit weicher Intumeszenzschicht beschichteter Polyurethan-Hartschaum-Platte

Aus einer handelsüblichen, 60 mm dicken Polyurethan-Hartschaum-Isolierplatte wurde ein Schaumelement mit den Massen von ca. 500 x 500 x 60 mm gesägt. Dieses Schaumelement wurde in ein Werkzeug mit beweglichem Formendeckel und einem Innenmaß von ca. 500 x 500 x 66 mm eingelegt. Eine Reaktionsmischung entsprechend Beispiel 15 aus EP 0 217 080 A1 wurde zubereitet. Die erhaltene, flüssige Reaktionsmischung wurde in das Werkzeug gegossen und der Formendeckel fest verschlossen. Nach einer Entformungszeit von ca. 10 Minuten wurde ein Formteil mit weicher Intumeszenzschicht erhalten. Es zeichnete sich besonders dadurch aus, dass die Intumeszenzschicht hervorragend auf dem Trägermaterial haftete.

### Beispiel 2

### Dämmstoff bestehend aus einseitig mit harter Intumeszenzschicht beschichteter Polyurethan-Hartschaum-Platte

Die Herstellung des in Beispiel 1 beschriebenen Dämmelementes wurde dahingehend modifiziert, dass eine Reaktionsmischung entsprechend Beispiel 12 aus EP 0 217 080 A1 eingesetzt wurde. Das erhaltene Formteil wies eine harte Intumeszenzschicht auf.

### Brandtechnische Prüfung und Prüfergebnisse

Zur Beurteilung der Flammwidrigkeit wurde die Feuerwiderstandsdauer der Dämmstoffe der Beispiele 1 und 2 sowie der unbeschichteten Polyurethan-Hartschaum-Platte als Vergleichsbeispiel bestimmt. Dazu wurde der Feuerwiderstand nach DIN 4102-8 im Kleinprüfstand bestimmt. Bei diesem Test werden zwei baugleiche Prüfkörper als Seitenwände eines Ölbrenners montiert. Die Abmessungen betragen 500 x 500 mm. Der Ölbrenner wird mit ca. 13 kg Öl / h betrieben. Die Temperaturen im Innenraum des Brenners erreichen ca. 1000 °C. Die Prüfkörper dienen als Brennraumbegrenzung. Die erfindungsgemäße Intumeszenzbeschichtung ist dem Feuer zugekehrt und den Flammen ungeschützt ausgesetzt. Auf der Außenseite jedes Prüfkörpers sind fünf Thermoelemente angebracht, eines genau in der Mitte und jeweils eines ungefähr in der Mitte jedes Quadranten. Mit den insgesamt 10 Thermoelementen wird die Temperaturerhöhung auf der Aussenseite während des gesamten Prüfzeitraumes aufgezeichnet. Die angezeigte Temperaturerhöhung gegenüber der Umgebungstemperatur darf bei jedem einzelnen Thermoelement 180 °C und in Mittel bei allen Thermoelementen 140 °C nicht überschreiten.

Die Ergebnisse dieser Prüfung sind in Tabelle 1 aufgeführt.

**Tabelle 1: Prüfergebnisse der brandtechnischen Prüfung**

| Beispiel | Vergleichsbeispiel | Beispiel 1 | Beispiel 2 |
|---|---|---|---|
| Beschreibung | unbeschichtete Polyurethan-Hartschaum-Platte | Einseitig, 8 - 10 mm dick und weich beschichtete Polyurethan-Hartschaum-Platte | Einseitig, 8 - 10 mm dick und hart beschichtete Polyurethan-Hartschaum-Platte |
| Mittlere Temperatur > 140 °C | > 30 min* | 53,5 min | 46,5 min |
| Temperatur lokal T > 180 °C | 24 min | 58,5 min | 48,0 min |

| | | | |
|---|---|---|---|
| * Eine mittlere Temperatur > 140 °C wurde während einer Prüfdauer von 30 min nicht erreicht. Die Prüfung wurde in diesem Fall nach 30 min abgebrochen, da bereits lokal > 180 °C erreicht worden waren. | | | |

### Auswertung

Neben dem Durchtritt des Feuers durch einen flächigen Prüfkörper ist die Erhöhung der Temperatur auf der dem Feuer abgekehrten Seite ein entscheidendes Prüfkriterium. Materialien mit hoher Feuerwiderstandsdauer zeichnen sich dadurch aus, dass diese Temperatur für eine möglichst lange Zeit ab Beginn der Beflammung die festgelegten Grenzen nicht überschreitet. Das Material muss eine möglichst gute Wärmeisolierwirkung aufweisen und diese Wärmeisolierwirkung darf durch Auswirkungen des Feuers möglichst wenig gemindert werden. Die Zeitangaben in Tabelle 1 zeigen, dass nach diesen Kriterien die Feuerwiderstandsdauer des erfindungsgemäßen Dämmstoffs, der eine nur ca. 8-10 mm dicke Intumeszenzschicht aufwies, gegenüber der unbeschichteten Polyurethan-Hartschaum-Platte des Vergleichsbeispiels erheblich verbessert werden konnte. Wie die Beispiele in Tabelle 1 zeigen, kann die schützende Beschichtung als Hartschaum oder als Weichschaum ausgeführt werden. Die Feuerwiderstandsdauer verbessert sich in jedem Fall.

### Akustische Prüfung und Prüfergebnisse

Zur Beurteilung der Schalldämpfung wurden von dem Dämmstoff des Beispiels 1 sowie von der unbeschichteten Polyurethan-Hartschaum-Platte als Vergleichsbeispiel der Schallabsorptionsgrad nach DIN EN ISO 10534-2 bestimmt. Dazu wurden Prüfkörper am einen Ende eines Prüfrohres positioniert. Am anderen Ende befand sich ein Lautsprecher, der senkrecht auf die Probe einstrahlte. An zwei Stellen des Prüfrohres waren Mikrofone installiert, mit denen der Schalldruck bestimmt werden konnte. Als Prüfergebnis wurde die relative Absorption des Schalls in Abhängigkeit von der Frequenz aufgezeichnet. Die Ergebnisse dieser Prüfung sind in Tabelle 2 aufgeführt.

**Tabelle 2: Prüfergebnisse der akustischen Prüfung**

| Beispiel | Vergleichsbeispiel | Beispiel 1 |
|---|---|---|
| Beschreibung | unbeschichtete Polyurethan-Hartschaum-Platte | einseitig beschichtete Polyurethan-Hartschaum-Platte |
| Frequenz [Hz] | Schallabsorption der Probe | Schallabsorption der Probe |
| 315 | -0,01 | 0,08 |
| 400 | 0,05 | 0,07 |
| 500 | 0,03 | 0,10 |
| 630 | 0,04 | 0,13 |
| 800 | 0,05 | 0,18 |
| 1000 | 0,06 | 0,23 |
| 1250 | 0,09 | 0,33 |
| 1600 | 0,21 | 0,53 |
| 2000 | 0,14 | 0,66 |
| 2500 | 0,12 | 0,82 |
| 3150 | 0,11 | 0,94 |
| 4000 | 0,15 | 0,91 |
| 5000 | 0,38 | 0,85 |

### Auswertung

Wie die Messergebnisse aus Tabelle 2 zeigen, ist die Schallabsorption und damit die Schalldämpfung des erfindungsgemäßen Dämmstoffs bei allen Frequenzen besser als diejenige der unbeschichteten Polyurethan-Hartschaum-Platte. Die nur 8 bis 10 mm dicke Intumeszenzschicht des Dämmstoffs bringt demnach nicht nur eine deutlich verbesserte Feuerwiderstandsdauer mit sich, sondern führt insbesondere bei Frequenzen oberhalb von 1600 Hz zur weitgehenden Absorption des Schalls.

## Patentansprüche

1. Dämmstoffe bestehend mindestens aus einer Isolierschicht und einer Intumeszenzschicht, **dadurch gekennzeichnet, dass**
A) die Isolierschicht aus einem Polyurethan-Hartschraum besteht,
B) die Intumeszenzschicht aus einem Polyurethan-Schaumstoff auf Basis von phosphorhaltigen Polyolen der Formel (I)
(R¹-O)₂P(=O)-CH₂-N(CHR²-CHR³-OH)₂ (I)
worin
R¹ gegebenenfalls mit einer Hydroxylgruppe substituiertes C₁- bis C₄-Alkyl und
R² und R³ unabhängig voneinander H oder Methyl
bedeuten,
besteht, wobei die Isolierschicht und die Intumeszenzschicht an der gemeinsamen Kontaktfläche fest und wasserbeständig miteinander verbunden sind,
und
C) die Dicke der Intumeszenzschicht 2 - 98 % der Dicke des gesamtem Dämmstoffs beträgt.

2. Dämmstoffe gemäß Anspruche 1, **dadurch gekennzeichnet, dass** es sich bei der Intumeszenzschicht um einen Weichschaum handelt.

3. Dämmstoffe gemäß Anspruche 1, **dadurch gekennzeichnet, dass** es sich bei der Intumeszenzschicht um einen Hartschaum oder einen halbharten Schaum handelt.

4. Dämmstoffe gemäß mindestens einem der Ansprüche 1 bis 3, **dadurch gekennzeichnet, dass** sie weitere Komponenten beinhalten.

5. Verfahren zur Herstellung von Dämmstoffen gemäß Anspruch 1, **dadurch gekennzeichnet, dass**
A) nach bekannten Verfahren ein Formkörper, Profil oder ähnliches Halbzeug aus dem Polyurethan-Hartschaum hergestellt wird,
B) durch Mischen der zur Herstellung des Polyurethan-Schaumstoffs auf Basis von phosphorhaltigen Polyolen der Formel (I) notwendigen Rohstoffe eine flüssige Reaktionsmischung hergestellt wird und
C) diese flüssige Reaktionsmischung auf die betreffenden Oberflächen des Halbzeugs aufgetragen wird, wo sie aufschäumt und aushärtet.

6. Verfahren gemäß Anspruch 5, **dadurch gekennzeichnet, dass** der Schritt C) nach der Methode des Formschäumens ausgeführt wird.

7. Verwendung der Dämmstoffe gemäß den Ansprüchen 1 bis 4 zur Wärmedämmung oder zur Schalldämpfung.

8. Verwendung gemäß Anspruch 7, **dadurch gekennzeichnet, dass** die Dämmstoffe gleichzeitig zur Wärmedämmung und zur Schalldämpfung verwendet werden.

9. Verwendung gemäß der Ansprüche 7 oder 8, **dadurch gekennzeichnet, dass** die Dämmstoffe in Form von Dämmstoffelementen verwendet werden.

## Claims

1. Insulating materials composed at least of one insulation layer and of one intumescent layer, **characterized in that**
A) the insulation layer is composed of a rigid polyurethane foam,
B) the intumescent layer is composed of a polyurethane foam based on phosphorus-containing polyols of the formula (I)
(R¹-O)₂P(=O)-CH₂-N(CHR²-CHR³-OH)₂ (I)
in which
R¹ is C₁-C₄-alkyl, if appropriate substituted by a hydroxy group, and
R² and independently of one another, are H or methyl,
R³, where there is a secure and water-resistant bond between the insulation layer and the intumescent layer, at the shared are of contact,
and
C) the thickness of the intumescent layer is from 2 to 98% of the thickness of the entire insulating material.

2. Insulating materials according to Claim 1, **characterized in that** the intumescent layer involves a flexible foam.

3. Insulating materials according to Claim 1, **characterized in that** the intumescent layer involves a rigid foam or a semirigid foam.

4. Insulating materials according to at least one of Claims 1 to 3, **characterized in that** they include further components.

5. Process for the production of insulating materials according to Claim 1, **characterized in that**
A) a molding, profile, or similar semifinished product composed of the rigid polyurethane foam is produced by known processes,
B) a liquid reaction mixture is produced via mixing of the raw materials necessary for the production of the polyurethane foam based on phosphorus-containing polyols of the formula (I), and
C) this liquid reaction mixture is applied to the relevant surfaces of the semifinished product, where it foams and hardens.

6. Process according to Claim 5, **characterized in that** step C) is executed by the foam-molding method.

7. Use of the insulating materials according to Claims 1 to 4 for thermal insulation or for sound-deadening.

8. Use according to Claim 7, **characterized in that** the insulating materials are used simultaneously for thermal insulation and for sound-deadening.

9. Use according to Claims 7 or 8, **characterized in that** the insulating materials are used in the form of insulating-material elements.

## Revendications

1. Matériaux isolants, constitués par au moins une couche d'isolation et une couche d'intumescence, **caractérisés en ce que**
A) la couche d'isolation est constituée par une mousse dure de polyuréthane,
B) la couche d'intumescence est constituée par une mousse de polyuréthane à base de polyols contenant du phosphore de formule (I)
(R¹-O)₂P(=O)-CH₂-N(CHR²-CHR³-OH)₂ (I)
où
R¹ signifie C₁-C₄-alkyle le cas échéant substitué par un groupe hydroxyle et
R² et R³ signifient, indépendamment l'un de l'autre, H ou méthyle
la couche d'isolation et la couche d'intumescence étant liées l'une à l'autre solidement et de manière résistant à l'eau au niveau de leur surface de contact commune, et
C) l'épaisseur de la couche d'intumescence représente 2 - 98% de l'épaisseur de la totalité du matériau isolant.

2. Matériaux isolants selon la revendication 1, **caractérisés en ce qu'**il s'agit, pour la couche d'intumescence, d'une mousse souple.

3. Matériaux isolants selon la revendication 1, **caractérisés en ce qu'**il s'agit, pour la couche d'intumescence, d'une mousse dure ou d'une mousse semi-dure.

4. Matériaux isolants selon au moins l'une quelconque des revendications 1 à 3, **caractérisés en ce qu'**ils comportent d'autres composants.

5. Procédé pour la préparation de matériaux isolants selon la revendication 1, **caractérisé en ce que**
A) un corps moulé, un profilé ou un produit semi-fini analogue est produit à partir de la mousse dure de polyuréthane selon des procédés connus,
B) par mélange des matières premières nécessaires pour la préparation de la mousse de polyuréthane à base de polyols contenant du phosphore de formule (I), un mélange réactionnel liquide est préparé et
C) ce mélange réactionnel liquide est appliqué sur les surfaces concernées du produit semi-fini, où il mousse et durcit.

6. Procédé selon la revendication 5, **caractérisé en ce que** l'étape C) est réalisée selon le procédé de moulage de mousse.

7. Utilisation des matériaux isolants selon les revendications 1 à 4 pour l'isolation thermique ou l'isolation acoustique.

8. Utilisation selon la revendication 7, **caractérisée en ce que** les matériaux isolants sont utilisés simultanément pour l'isolation thermique et l'isolation acoustique.

9. Utilisation selon les revendications 7 ou 8, **caractérisée en ce que** les matériaux isolants sont utilisés sous forme d'éléments de matériau isolant.
